# EUROPEAN PATENT APPLICATION

(11) **EP 2 594 820 A1**
(43) Date of publication of application: **22.05.2013**
(21) Application number: 11806653.9
(22) Date of filing: 04.07.2011
(51) Int. Cl.: F16D 3/20

(54) **CONSTANT-VELOCITY BALL JOINT**

(30) Priority: 15.07.2010 JP 2010160739
(71) Applicant: JTEKT Corporation, Osaka-shi, Osaka 542-8502 (JP)
(72) Inventor: SUZUKI Satoshi, Osaka-shi Osaka 542-8502 (JP); NAKAI Shinji, Osaka-shi Osaka 542-8502 (JP); SHIGENO Tomo, Osaka-shi Osaka 542-8502 (JP)
(74) Representative: TBK
(86) International application number: PCT/JP2011/065263
(87) International publication number: WO 2012/008323

(57) **Abstract**

It is an object of the present invention to provide a constant-velocity ball joint which can improve the duration of life by improving the strength and the rigidity of the cage.

The thickness in a radial direction of the cage is set to be larger than a contact width in a radial direction of the ball in the window portion of the cage when the joint operating angle is in a maximum value.

## Description

### TECHNICAL FIELD

This invention relates to a constant-velocity ball joint which transmits a driving force to an automobile vehicle wheel which is to be steered and at the same time changes joint operating angle in response to a rudder angle of the steered wheel, or in other words, relates to a constant velocity ball joint which is used for a front drive shaft of the automobile.

### BACKGROUND OF THE TECHNOLOGY

As a conventional constant velocity ball joint, one example of such joint has been described in Japanese Patent Publication No.11 (1999)-325094 A (Patent Document 1). According to the constant velocity ball joint disclosed in the publication, in order to allow a movement of a ball in a cage in a radial direction and yet at the same time to reduce the thickness of the cage in a radial direction, each window of the cage is provided with a projection. It is noted here that a constant velocity ball joint used for the front drive shaft of an automobile is structured to have a wide contact width of the cage with the ball in a radial direction. Therefore, in such constant velocity ball joint, the thickness of the cage in a radial direction has been formed to correspond to the contact area with the ball in the cage in a radial direction.

### DISCLOSURE OF INVENTION

### PROBLEMS TO BE SOLVED

The cage is formed to have a shape in which each annular portion of each side of the cage in an axial direction is connected with a plurality of columnar portions. In the area of the columnar portions of the cage may be the area where the strength and rigidity are the lowest in the structure of the constant velocity ball joint. Under such situation, improving the duration of life of the constant velocity ball joint is considered to be attained by improving the strength and rigidity of the cage.

The present invention has been made in consideration with the above issues and the object of the invention is to provide a constant velocity ball joint which can improve the duration of life by improving the strength and rigidity of the cage.

### MEANS FOR SOLVING THE PROBLEMS

(1) The present invention is characterized in that a constant velocity ball joint transmitting a driving force to an automobile vehicle wheel to be steered and at the same time changing a joint operating angle in response to a rudder angle of the steered wheel, comprises an outer race formed to be of cylindrical shape having an opening at least at one side in an axial direction and having a plurality of outer race ball grooves at an inner peripheral surface, an inner race disposed inside of the outer race and having a plurality of inner race ball grooves at an outer peripheral surface, a plurality of balls rolling in the outer race ball grooves and the inner race ball grooves for transmitting torque between the outer race and the inner race and a cage formed to be of annular shape and disposed between the outer race and the inner race, the cage being formed with a plurality of window portions in a peripheral direction for accommodating the plurality balls therein, wherein the thickness of the cage in a radial direction is set to be larger than a contact width of the ball in a radial direction in the window portions of the cage when the joint operating angle is in a maximum value.

According to this structure of the invention, the thickness of the cage in a radial direction is set to be larger than the contact width of the ball in a radial direction in the window portions of the cage. As a result, the strength and rigidity of the cage can be improved thereby to improve the duration of life of the constant velocity ball joint as a whole. It is noted here that in order to thicken the thickness of the cage in a radial direction without increasing the overall size of the constant velocity ball joint, it is necessary to minimize the contacting angle formed between the outer race and the inner race and the ball, or to shorten the long diameter of the contact ellipse formed by the contact of the ball with the outer race and the inner race. In either case, the surface pressure applied to the inner race ball grooves and the outer race ball grooves will be increased. This issue of a conventional constant velocity ball joint can be solved by applying high-pressure resistance grease, providing a further high hardness processed inner and outer race ball grooves by an improved quenching treatment, or by improving the material used for the inner and outer race ball grooves.

(2) Further, a non-contact area of the ball is formed in the window portion of the cage outwardly in a radial direction and inwardly in a radial direction relative to the contact width of the ball in the radial direction when the joint operating angle is in a maximum value.

By taking this measure, the cage can be surely thickened in a radial direction, keeping the contact ellipse formed at the inner and outer race ball grooves to be complete, or if not complete, formed to have a minimum deficiency or recess as little as possible. Accordingly, the strength and rigidity of the cage can be surely improved which leads to the improvement in duration of life of the constant velocity ball joint.

### BRIEF EXPLANATION OF ATTACHED DRAWINGS

Fig. 1 is an axial cross sectional view of the constant velocity ball joint;
Fig. 2 (First Embodiment) shows a partial cross sectional view in a direction perpendicular to the axis of the constant velocity ball joint and showing a contacting condition of an inner race ball groove, an outer race ball groove, a ball and the cage when a torque is being transmitted;
Fig. 3 (Second Embodiment) shows a partial cross sectional view in a direction perpendicular to the axis of the constant velocity ball joint and showing a contacting condition of an inner race ball groove, an outer race ball groove, a ball and the cage when a torque is being transmitted; and
Fig. 4 (Comparative Example) shows a partial cross sectional view in a direction perpendicular to the axis of the constant velocity ball joint and showing a contacting condition of an inner race ball groove, an outer race ball groove, a ball and the cage when a torque is being transmitted.

### THE EMBODIMENTS FOR IMPLEMENTING THE INVENTION

### < First Embodiment>

### (Overall Structure of Constant velocity ball joint)

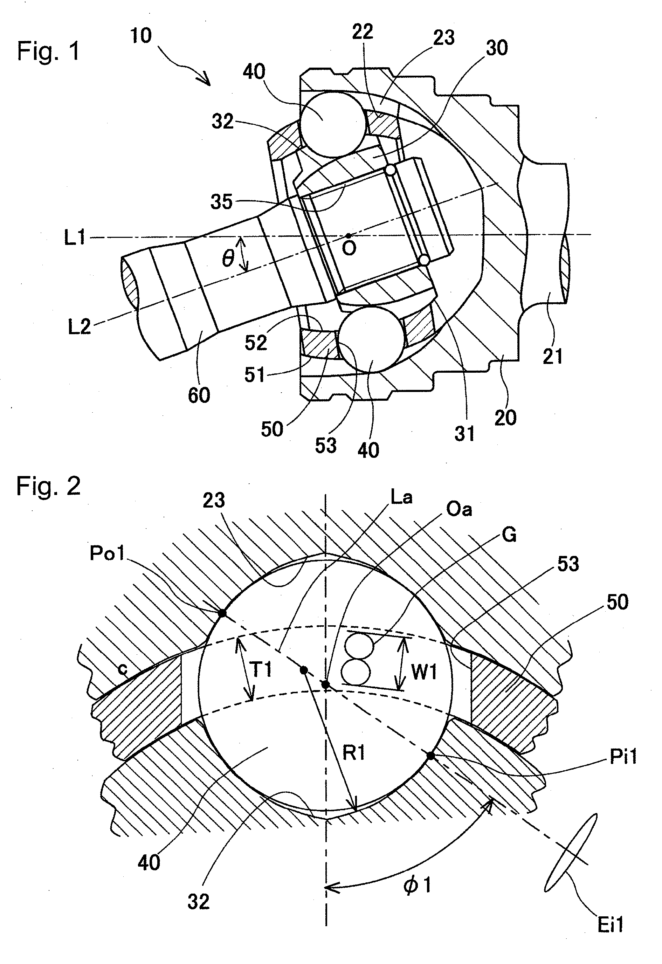

The constant velocity ball joint 10 (hereinafter, referred to as simply a constant velocity joint) according to the embodiment will be explained with reference to Fig. 1. Fig. 1 is an axial cross sectional view of the constant velocity joint 10 of this embedment under a condition of the constant velocity joint 10 with a predetermined joint operating angle "θ". It is noted here that hereinafter the opening side of the outer race 20 means the left side as viewed in Fig. 1 and the back side of the outer race 20 means the right side as viewed in Fig. 1.

The constant velocity joint 10 according to the embodiment is a constant velocity ball joint which transmits a driving force to an automobile vehicle wheel which is a vehicle wheel to be steered and changes the joint operating angle "θ" in response to a rudder angle of the steered vehicle wheel, and in more detail, is a constant velocity ball joint applied to a front drive shaft of an automobile. This constant velocity joint 10 will be explained with an example of joint center fixed type constant velocity ball joint (referred to also as, Rzeppa Constant Velocity Joint) as shown in Fig. 1. Particularly, in this embodiment, the joint center fixed type constant velocity ball joint of undercut free type (UF) is exampled and will be explained. It is noted however, that the invention is also applicable to other type such as a Birfield type (BF) joint center fixed type constant velocity ball joint or a double offset type joint center fixed type constant velocity ball joint.

The constant velocity joint 10 is structured by an outer race 20 having a plurality of outer race ball grooves 23, an inner race 30 having a plurality of inner race ball grooves 32, a plurality of balls 40, a cage 50 and a shaft 60. Each component of the constant velocity joint will be explained hereinafter in detail.

The outer race 20 is formed to be of a cup shape (bottomed cylinder shape) having an opening at the left side in Fig. 2 (corresponding to "one side in an axial direction" of the invention). A connecting shaft 21 is formed integrally with the outer race 20 at an outward of the bottom portion (the right side in Fig.1) and the connecting shaft extends in an axial direction of the outer race. This connecting shaft 21 is connected to another power transmitting shaft. The inner peripheral surface of the outer race 20 is formed to be a concave spherically shaped surface. In more detail, the concave spherically shape surfaced inner peripheral surface 22 of the outer race 20 is formed by a part of a spherical surface which draws a curved line centering on a point "O" of intersection of the outer race axial line L1 and the inner race axial line L2, as a center of curvature. When viewed in a cross section in the outer race axial direction, the surface is formed to be of a concave circular shape.

Further, the plurality of outer race ball grooves 23 each of which has a concave circular shape in a cross section in a direction perpendicular to the outer race axis is formed at the inner peripheral surface of the outer race 20. The grooves 23 are formed to be extending approximately in the outer race axis direction. The plurality of (in this embodiment, six grooves are formed) outer race ball grooves 23 are formed with an equal distance (in this embodiment, 60 degree) apart from one another in a peripheral direction when viewed in cross section in a radial direction. It is noted here that the outer race axis direction means the direction passing through the axis center of the outer race 20, i.e., the rotational axis direction of the outer race 20.

The inner race 30 is formed to be of an annular shape and disposed inside of the outer race 20. The outer peripheral surface 31 of the inner race 30 is formed to be a convex spherically shaped surface. In more detail, the convex spherically shaped outer peripheral surface 31 of the inner race 30 is formed by a part of a spherical surface which profile draws a curved line centering on the point "O" of intersection of the outer race axial line L1 and the inner race axial line L2 as the center of curvature. When viewed in a cross section in the inner race axial direction, the surface is formed to be of a convex circular shape.

Further, the plurality of inner race ball grooves 32 each of which has an approximately concave circular shape in a cross section in a direction perpendicular to the inner race axis is formed at the outer peripheral surface of the inner race 30. The grooves 32 are formed to be extending approximately in the inner race axis direction. The plurality of (in this embodiment, six grooves are formed) inner race ball grooves 32 are formed with an equal distance (in this embodiment, 60 degree) apart from one another in a peripheral direction when viewed in cross section in a radial direction and the number of the grooves 32 formed is the same number of the grooves 23 formed at the outer race 20. In other words, the respective inner race ball grooves 32 are positioned opposite to the corresponding respective outer race ball grooves 23 of the outer race 20. Further, an internally toothed spline 35 extending in an inner race axis direction is formed on the inner peripheral surface of the inner race 30. This internally toothed spline 35 engages with an externally toothed spline of the shaft 60. It is noted here that the inner race axis direction means the direction passing through the axis center of the inner race 20, i.e., the rotational axis direction of the inner race 30.

The plurality of balls 40 is disposed between the plurality of outer race ball grooves 23 of the outer race 20 and oppositely positioned corresponding plurality of inner race ball grooves 32 to be sandwiched therebetween. Each ball 40 engages with each outer race ball groove 23 and oppositely positioned each inner race ball groove 32 in a peripheral direction (in the outer race axis direction or in the inner race axis direction) and is freely rollable therein. Thus, the ball 40 transmits the torque between the outer and inner races 20 and 30.

The cage 50 is formed to be of annular shape. The outer peripheral surface 51 of the cage 50 is formed to be of partial spherical surface shape which substantially corresponds to the concave spherically shaped inner peripheral surface 22 of the outer race 20, in other words, the outer peripheral surface 51 of the cage 50 is formed to be of convex spherical shape. On the other hand, the inner peripheral surface 52 of the cage 50 is formed to be of partial spherical surface shape which substantially corresponds to the convex spherically shaped outer peripheral surface 31 of the inner race 30, in other words, the inner peripheral surface 52 of the cage 50 is formed to be of concave spherical shape. The cage 50 is disposed between the concave spherically shaped inner peripheral surface 22 of the outer race 20 and the convex spherically shaped outer peripheral surface 31 of the inner race 30. The cage 50 is provided with a plurality of window portions 53 arranged with an equal distance apart from one another in a peripheral direction (in a peripheral direction of the axial center of the cage), each having a rectangular penetration hole. The number of window portions 53 of the cage 50 is the same with the number of balls 40 and each window portion 53 receives each one ball 40 therein.

### (Detail Structures of Outer race ball groove, Inner race ball groove and Cage)

Next, the detail structures of the outer race ball groove 23, inner race ball groove 32 and the cage 50 will be explained hereinafter with reference to Fig. 2. It is noted that the cross section in a direction perpendicular to the outer race axis of the outer race ball groove 23 is formed to be of a so-called Gothic architecture shape as shown in Fig. 2, in which two concave circular shapes with different centers are connected. The curvature of radius of the concave circular shape inner race ball groove 32 according to the embodiment is set to be the value R1. Accordingly, under the joint operating angle being the value of "θ" and upon the torque being transmitted, as shown in Fig. 2, the outer race ball groove 32 and the ball 40 are brought into contact with each other within a range of an ellipse having the center at the outer race contacting point Po1, whereas the inner race ball groove 32 and the ball 40 are brought into contact with each other within a range of an ellipse having the center thereof at the inner race contacting point Pi1. The size of the contact ellipse Ei1 formed by the inner race contacting point Pi1 is indicated in Fig. 2.

The size of the contact ellipse Ei1 varies in response to the value of curvature of radius R1 of the concave circular shaped inner race ball groove 32. In other words, larger the curvature of radius R1 of the concave circular shaped inner race ball groove 32, smaller the both long and short diameters of the contact ellipse Ei1 formed by the ball 40 and the inner race ball groove 32 become. On the contrary, smaller the curvature of radius R1 of the concave circular shaped inner race ball groove 32, larger the long and short diameters (the lengths of long axis and short axis) of the contact ellipse Ei1 formed by the ball 40 and the inner race ball groove 32 become.

According to the embodiment, the contacting angle is represented as φ1. The contacting angle φ1 under contacting condition shown in Fig. 2, is defined as an acute angle formed by the radius line "La" of the inner race 30 which passes through the central point "Oa" of the ball 40 and the normal line in the inner race contacting point Pi1 which is the central point of the contact ellipse Ei1 formed by the inner race ball groove 32 and the ball 40. The size of the contact ellipse Ei1 varies in response to the contacting angle φ1. In other words, larger the contacting angle φ1, smaller the both long and short diameters of the contact ellipse Ei1 formed by the ball 40 and the inner race ball groove 32 become. On the contrary, smaller the contacting angle φ1, larger the long and short diameters of the contact ellipse Ei1 formed by the ball 40 and the inner race ball groove 32 become.

Further, under the joint operating angle being the value "θ", when the balls 40 are rolling in the outer race ball grooves 23 and the inner race ball grooves 32, the balls 40 are brought into contact with opening side surfaces of the window portions 53 of the cage 50 at the outer race 20 side. This is because a pushing force to push the ball 40 towards the opening side of the outer race 20 is generated due to the wedge effect by the outer race ball grooves 23 and the inner race ball grooves 32. Thus, the contacting position of each ball 40 moves in the window portion 53 of the cage 50. As shown in Fig. 2, the contacting locus G of the ball 40 in the window portion 53 becomes the numeral "8" shape. When the ball 40 is positioned at the opening side (left in Fig. 1) of the outer race 20, the contacting position of the ball in the window portion 53 is positioned radially outward position in the "8" shape. On the other hand, when the ball 40 is positioned at the back side (right in Fig. 1) of the outer race 20, the contacting position of the ball in the window portion 53 is positioned radially inward position in the "8" shape. The contact width in a radial direction of the cage 50 in the contacting locus G is represented as "W1".

The thickness of the cage 50 in a radial direction is set to be the value "T1". The thickness T1 of the cage 50 in the radial direction is set to be larger than the contact width W1 of the ball 40 in a radial direction. In more detail, the window portion 53 of the cage 50 is designed to form a non-contact area of the ball 40 with the cage 50 in a radially outward direction and a radially inward direction in contrast with the contact width W1 of the ball 40 in the window portion 53 in a radial direction, when the joint operating angle θ becomes the maximum value.

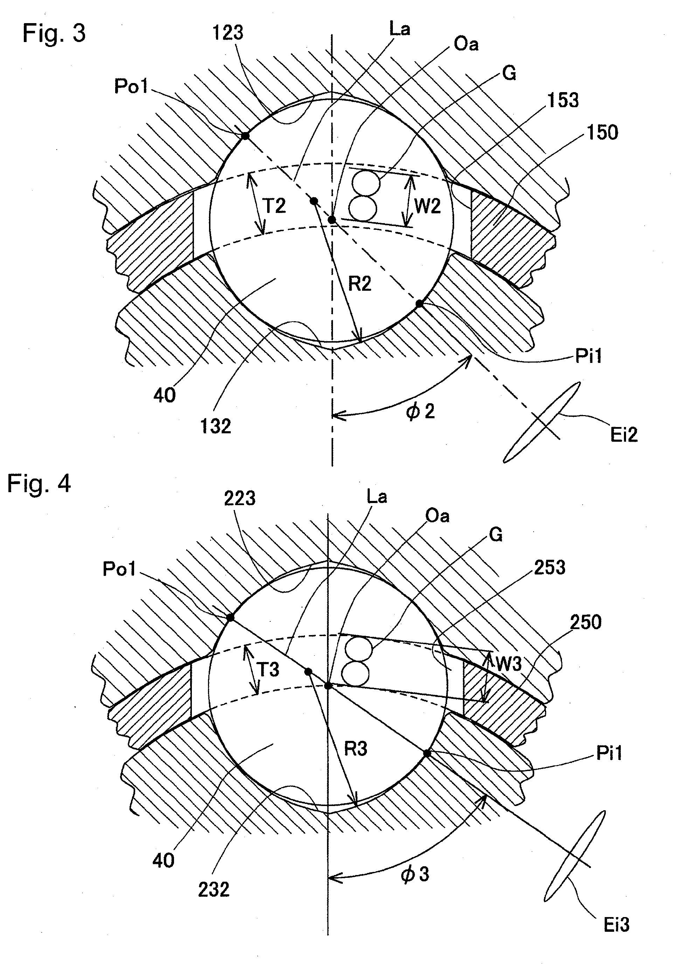

In order to be more easily understandable, the size, position, etc. of the contact ellipse Ei1 according to this embodiment will be explained in comparison with those of a comparative example, which are shown in Fig. 4. It is noted that the outer race ball grooves 223, inner race ball grooves 232 and the cage 250 of the comparative example are different from those (outer race ball grooves 23, inner race ball grooves 32 and the cage 50) of the embodiment in the following points.

As shown in Fig. 4, in the comparative example, the contact width W3 of the ball 40 in the window portion 253 of the cage 250 in a radial direction and the thickness T3 of the cage 250 in a radial direction are set to be the same. The contact width W3 in a radial direction according to the comparative example is set to the same value as the contact width W1 in a radial direction according to the embodiment. Accordingly, the thickness T3 of the cage 250 in a radial direction according to the comparative example becomes smaller than the thickness T1 of the cage 50 in a radial direction according to the embodiment. Further, the contacting angle φ1 of the comparative example is set to be the same value as the contacting angle φ1 of the embodiment. However, the curvature of radius R3 of the concave circular shape inner race ball groove 232 of the comparative example is set to be smaller than the curvature of radius R1 of the concave circular shape inner race ball groove of the embodiment. Accordingly, the long diameter and the short diameter of the contact ellipse Ei3 of the comparative example become larger than the long diameter and the short diameter of the contact ellipse Ei1 of the embodiment, respectively.

Now the structure of the embodiment shown in Fig. 2 and the structure of the comparative example shown in Fig. 4 will be compared. Recess or deficiency generated in the contact ellipses Ei1 and Ei3 leads to the deterioration of duration of life due to stress concentration and for this reason, the ellipse should be complete without any recess or deficiency or should such deficiency exist, such shall be a very small one. The difference between the long diameter of the contact ellipse Ei1 and the length from the inner race contacting point Pi1 which is the central point of the contact ellipse Ei1 to the shoulder portion (opening edge portion) of the inner race ball groove 32 is set to be approximately the same to the difference between the long diameter of the contact ellipse Ei3 and the length from the inner race contacting point Pi1 which is the central point of the contact ellipse Ei3 to the shoulder portion of the inner race ball groove 32.

The contact width W1 of the embodiment in a radial direction and the contact width W3 of the comparative example in a radial direction are the same, but the thickness T1 of the cage 50 of the embodiment in a radial direction and the thickness T3 of the cage 250 of the comparative example in a radial direction are different from each other. Further, the values of contacting angles φ1 and φ3 are the same. In this case, it is necessary for the long diameter of the contact ellipse Ei1 of the embodiment to be set shorter than the long diameter of the contact ellipse Ei3 of the comparative example in order to have the recess or deficiency of the contact ellipse Ei1 of the embodiment to be approximately the same as the recess or the deficiency of the contact ellipse Ei3 of the comparative example.

Therefore, according to this embodiment, the curvature of radius R1 of the concave circular shape inner race ball groove 32 is set to be larger than the curvature of radius R3 of the concave circular shape inner race ball groove 232 of the comparative example. By thus setting, the long diameter and short diameter of the contact ellipse Ei1 of the embodiment can be set shorter than those of the contact ellipse Ei3 of the comparative example. Thus, by enlarging the curvature of radius R1, the thickness T1 of the cage 50 in a radial direction can be set larger than the thickness T3 of the cage 250 in a radial direction of the comparative example.

By enlarging the thickness T1 of the cage 50 in a radial direction, the strength and rigidity of the cage 50 can be improved and as the result, the duration of life of the cage 50 can be improved. The duration of life of the cage 50 is the shortest among the components forming the constant velocity joint 10 and accordingly, the improvement of duration of life of the cage 50 can improve the duration of life of the constant velocity joint 10.

It is noted here that the long diameter and the short diameter of the contact ellipse Ei1 of the embodiment are respectively set to be shorter than the long diameter and the short diameter of the contact ellipse Ei3 of the comparative example. This means that the surface pressure (pressure) applied to the inner race ball groove 32 by the ball 40 according to the embodiment becomes higher than the surface pressure applied to the inner race ball groove 232 from the ball 40 according to the comparative example. In order to solve this issue, measures have been taken, such as application of high-pressure resistance grease on the groove, further hardening of the inner race ball groove 32 by improving the quenching treatment or improving the material for the inner race 30. This can be said to the outer race 20. By thus taking various measures, the strength and rigidity of the cage 50 can be improved and as the result, the duration of life of the constant velocity joint 10 can be improved accordingly.

### <Second Embodiment>

Next, the detail structures of the outer race ball grooves 123, inner race ball grooves 132 and the cage 150 according to the second embodiment will be explained with reference to Fig. 3. It is noted that the outer race ball grooves 123, inner race ball grooves 132 and the cage 150 according to the second embodiment are different in structure from those of the first embodiment and the comparative example in the following points

As shown in Fig. 3, the cage 250 of the second embodiment is structured to be the same with the cage 50 of the first embodiment. The thickness T2 in a radial direction of the cage 150 according to the second embodiment has the same thickness with the cage 50 of the first embodiment and the contact width W2 in a radial direction of the ball 40 in the window portion 153 of the cage 150 has the same contact width with that of the first embodiment. In other words, the thickness T2 in a radial direction of the cage 150 of the second embodiment is set to be greater than the contact width W2 in a radial direction.

Further, the contacting angle φ2 of the second embodiment is set to be smaller than the contacting angle φ1 of the first embodiment. In other words, the inner race contacting point Pi2, which is the center of the contact ellipse Ei2, of the second embodiment positions further groove bottom side (lower side in Fig. 3) of the inner race ball groove 132 than the inner race contacting point Pi1, which is the center of the contact ellipse Ei3, of the first embodiment and the comparative example. The curvature of radius R2 of the concave circular shape inner race ball groove 132 according to the second embodiment is set to be the same value with the curvature of radius R3 of the comparative example and is set to be smaller than the curvature of radius R1 of the first embodiment. Thus, the long diameter and the short diameter of the contact ellipse Ei2 of the second embodiment are respectively the same to those of the contact ellipse Ei3 of the comparative example.

Now the structure of the second embodiment shown in Fig. 3 and the structure of the comparative example shown in Fig. 4 will be compared. Recess or deficiency in the contact ellipses Ei2 and Ei3 leads to the deterioration of duration of life due to stress concentration and for this reason, the ellipse should be complete without any recess or deficiency or should exist, such recess shall be a very small one. The difference between the long diameter of the contact ellipse Ei2 and the length from the inner race contacting point Pi2 which is the central point of the contact ellipse Ei2 to the shoulder portion (opening edge portion) of the inner race ball groove 132 is set to be approximately the same to the difference between the long diameter of the contact ellipse Ei3 and the length from the inner race contacting point Pi1 which is the central point of the contact ellipse Ei3 to the shoulder portion of the inner race ball groove 232.

The contact width W2 in a radial direction and the contact width W3 in a radial direction are the same, but the thickness T2 of the cage 150 of the second embodiment in a radial direction and the thickness T3 of the cage 250 of the comparative example in a radial direction are different from each other. Further, the curvature of radius R2 of the concave circular shape inner race ball groove 232 according to the second embodiment is set to be the same value with the curvature of radius R3 of the inner race ball groove 232 of the comparative example. In this case, it is necessary for the inner race contacting point Pi2 which is the center of the contact ellipse Ei2 in the second embodiment to be positioned further groove bottom side of the inner race ball groove 232 than the inner race contacting point Pi1 which is the center of the contact ellipse Ei3 of the comparative example in order to have the recess or deficiency of the contact ellipse Ei2 of the second embodiment to be approximately the same as the recess or the deficiency of the contact ellipse Ei3 of the comparative example.

Therefore, the contacting angle φ2 of the concave circular shape inner race ball groove 132 of the second embodiment is set to be smaller than the contacting angle φ3 of the concave circular shape inner race ball groove 232 of the comparative example. By thus setting, it is necessary for the inner race contacting point Pi2 which is the center of the contact ellipse Ei2 in the second embodiment to be positioned further groove bottom side of the inner race ball groove 232 than the inner race contacting point Pi1 which is the center of the contact ellipse Ei3 of the comparative example. Thus, by setting the contacting angle φ2 to be smaller than the contacting angle φ3, the thickness T2 in a radial direction of the cage 150 can be set to be greater than the thickness T3 in a radial direction of the cage 250 of the comparative example.

By enlarging the thickness T2 of the cage 150 in a radial direction according to the second embodiment, the strength and rigidity of the cage 150 can be improved and as the result, the duration of life of the cage 150 can be improved. The duration of life of the cage 150 is the shortest among the components forming the constant velocity joint 10 and accordingly, the improvement of duration of life of the cage 150 can improve the duration of life of the constant velocity joint 10.

It is noted here that the contacting angle φ2 of the second embodiment is set to be smaller than the contacting angle φ3 of the comparative example. This means that the surface pressure (pressure) applied to the inner race ball groove 132 by the ball 40 according to the second embodiment becomes higher than the surface pressure applied to the inner race ball groove 232 from the ball 40 according to the comparative example. In order to solve this issue, measures have been taken, such as application of high-pressure resistance grease on the groove, further hardening of the inner race ball groove 132 by improving the quenching treatment or improving the material for the inner race 30. This can be said to the outer race 20. By thus taking various measures, the strength and rigidity of the cage 150 can be improved and as the result, the duration of life of the constant velocity joint 10 can be improved accordingly.

### EXPLANATION OF REFERENCE NUMERALS

In the drawings:
10: constant velocity ball joint, 20: outer race, 23, 123, 223: outer race ball groove, 30: inner race, 32, 132, 232: inner race ball groove, 40: ball, 50, 150, 250: cage, 51: outer peripheral surface, 52: inner peripheral surface, 53, 153, 253: window portion, 60: shaft, Ei1, Ei2, Ei3: contact ellipse, G: contacting lotus, L1: outer race axis line, L2: inner race axis line, La: radius line, O: center of joint, Oa: center of ball, Po1: outer race contacting point, Pi1, Pi2: inner race contacting point, R1, R2, R3: curvature of radius of the inner race ball groove, T1, T2, T3: thickness in a radial direction of the cage, W1, W2, W3: contact width between the ball and the cage, φ1, φ2, φ3: contacting angle.

## Claims

1. A constant-velocity ball joint transmitting a driving force to an automobile vehicle wheel to be steered and at the same time changing a joint operating angle in response to a rudder angle of the steered wheel, comprising:
an outer race formed to be of cylindrical shape having an opening at least at one side in an axial direction and having a plurality of outer race ball grooves at an inner peripheral surface;
an inner race disposed inside of the outer race and having a plurality of inner race ball grooves at an outer peripheral surface;
a plurality of balls rollable in the outer race ball grooves and the inner race ball grooves for transmitting torque between the outer race and the inner race; and
a cage formed to be of annular shape and disposed between the outer race and the inner race, the cage being formed with a plurality of window portions in a peripheral direction for accommodating the plurality balls therein, wherein
the thickness of the cage in a radial direction is set to be larger than a contact width of the ball in a radial direction in the window portions of the cage when the joint operating angle is in a maximum value.

2. The constant-velocity ball joint according to claim 1, wherein a non-contact area of the ball is formed in the window portions of the cage outwardly in a radial direction and inwardly in a radial direction relative to the contact width of the ball in the radial direction when the joint operating angle is in the maximum value.
